# EUROPÄISCHE PATENTSCHRIFT

(11) **EP 0 242 770 B1**
(45) Veröffentlichungstag und Bekanntmachung des Hinweises auf die Patenterteilung: **10.11.1993**
(21) Anmeldenummer: 87105475.5
(22) Anmeldetag: 13.04.1987
(51) Int. Cl.: H04M 3/42, H04M 1/57

(54) **Verfahren zur Durchführung unterschiedlicher Prozesse in einem digitalen für Sprach- und Datenübertragung geeigneten Fernmeldeendgerät**
Method for realizing different processes in a digital telecommunication terminal adapted to speech and data transmission
Méthode pour réaliser différents processus dans un terminal numérique de télécommunication adapté pour la transmission de paroles et de données

(30) Priorität: 24.04.1986 DE 3613897; 24.04.1986 DE 3613960; 24.04.1986 DE 3613916
(43) Veröffentlichungstag der Anmeldung: 28.10.1987
(73) Patentinhaber: SIEMENS AKTIENGESELLSCHAFT, 80333 München (DE)
(72) Erfinder: von Ow, Hans-Peter, Dr.-Ing., D-8000 München 71 (DE); Ramberger, Friedrich, A-1030 Wien (AT); Tietsch, Michael, Dipl.-Ing., D-8000 München 70 (DE); Fischer, Peter, D-5810 Witten (DE); Waller, Roland, CH-8004 Zürich (CH)

(56) Entgegenhaltungen:
- REVIEW OF THE ELECTRICAL COMMUNICATION LABORATORIES, Band 33, Nr. 2, März 1985, Seiten 221-232, Tokyo, JP; I. KAWASHIMA et al.: "Terminal control equipment"
- COMMUTATION & TRANSMISSION, Band 7, Nr. 1, April 1985, Seiten 71-82, Paris, FR; M. DEMEAUTIS et al.: "Le TV 200 un terminal telephonique à lecteur de cartes"
- IEEE JOURNAL ON SELECTED AREAS IN COMMUNICATIONS, Band SAC-3, Nr. 4, Juli 1985, Seiten 497-507, IEEE, New York, US; P.H. GORMAN et al.: "The horizon communications system"
- TELCOM REPORT, Band 8, Nr. 3, Mai/Juni 1985, Seiten 230-235, Erlangen, DE; R. KASPRZYK et al.: "Das neue Komforttelefon Siemens masterset 380"
- RADIO FERNSEHEN ELEKTRONIK, Band 33, Nr. 1, Januar 1984, Seiten 16-18, Ost-Berlin, DD; U. HÜBNER: "Einchip-Mikrorechner im Telefon"

## Beschreibung

Die Erfindung betrifft ein Verfahren zur Durchführung unterschiedlicher Prozesse (z.B. Aufbau von Verbindungen, Nutzung bestimmter Leistungsmerkmale) auf Grund externer oder durch Betätigen von Ziffern-, Funktions- oder Namenstasten erfolgter interner Anreize in einem digitalen für Sprach- und Datenübertragung geeigneten Fernmeldeendgerät.

Bei einem derartigen digitalen für Sprach- und Datenübertragung geeigneten Fernmeldeendgerät besteht die Notwendigkeit, mehrere gleiche oder ähnliche Prozesse zu steuern. Dabei kann es sich z.B. um zwei Sprachverbindungen und eine Nicht-Sprach- Verbindung handeln. Bei den zwei Sprachverbindungen kann es sich um eine gehende oder kommende Erstverbindung und um eine ankommende Zweitverbindung handeln. Bei Sekretär-Stationen einer Vorzimmeranlage können bis zu vier weitere Sprachverbindungen hinzukommen. Dies führt zu einem komplizierten Steuerungsverfahren, bei dem eine große Anzahl von Zuständen bearbeitet werden muß, da auch alle Kombinationszustände berücksichtigt werden müssen.

Ein derartiges Fernmeldeendgerät, bei dem unterschiedliche Prozesse mehreren jeweils unterschiedlichen Kombinationen von jeweils gleichen Einheiten des digitalen Fernmeldeendgeräts zugeordnet werden, die dann den ihnen zugeordneten Prozeß mit den jeweiligen kombinierten zusammenhängenden Bearbeitungsschritten durchführen, ist z. B. aus "Review of the Electrical Communication Laboratories", Band 33, Nr. 2, März 1985, Tokyo, Japan, Seite 221 bis 232; I. Kawashima et al: "Terminal Control Equipment", bekannt.

Aufgabe der vorliegenden Erfindung ist es, ein Verfahren der eingangs genannten Art anzugeben, welches möglichst übersichtlich ist, und bei dem unter Verwendung immer gleicher Programmteile eine sichere Verarbeitung gewährleistet ist.

Diese Aufgabe wird für ein Verfahren der oben genannten Art dadurch gelöst, daß jeweils einem oder mehreren der aufgrund eines Anreizes durchzuführenden Prozesse eine von mehreren Untereinheiten des digitalen Fernmeldeendgerätes zugeordnet wird, wobei jeweils bestimmte Untereinheiten bestimmten durchzuführenden Prozessen zugeordnet werden, und jede Untereinheit alle mit dem jeweiligen Prozeß zusammenhängende Bearbeitungsschritte in der Weise selbsttätig abwickelt, daß von ihr das dem jeweiligen Anreiz zugeordnete Ergebnis ausgegeben wird, daß alle Anreize einer zentralen Eingangsschaltung zugeführt werden, in der in einem Zustandsspeicher die augenblicklichen Zustände der einzelnen Untereinheiten abgespeichert sind, und daß die zentrale Eingangsschaltung aufgrund der abgespeicherten Zustände die eintreffenden Anreize auf die entsprechenden Untereinheiten verteilt.

Durch die Aufteilung des Fernmeldeendgeräts in mehrere Untereinheiten, denen jeweils die Abwicklung bestimmter Prozesse zugeordnet wird, erhält man für jeden durchzuführenden Prozeß übersichtliche Steuerungsprozeduren. Da Kombinationszustände entfallen, ist die Summe aller zu beachtenden Zustände bedeutend geringer. Verfahrensschritte, die den einzelnen Untereinheiten zugeordnet sind, können weitgehend unabhängig voneinander verändert werden. Weiterhin wird auf einfache Weise die richtige Zuordnung der entstehenden Anreize zu den einzelnen Untereinheiten sichergestellt. Diese Sicherstellung der Zuordnung von Anreizen wird zusätzlich noch dadurch sichergestellt, daß die Änderungen im zentralen Zustandsspeicher durch die Untereinheiten erfolgen.

Nach weiteren zweckmäßigen Ausgestaltungen des erfindungsgemäßen Verfahrens sind mindestens zwei Untereinheiten für die Abwicklung von Sprachverbindungen und eine Untereinheit für die Abwicklung von Nicht-Sprach-Verbindungen zuständig, während eine oder mehrere weitere Untereinheiten für die Abwicklung von zusätzlichem Fernsprechendgerät vorgesehenen Leistungsmerkmalen zuständig sind. Eine weitere Möglichkeit sieht vor, daß lediglich eine Untereinheit für die Abwicklung von Nicht-Sprach Verbindungen und von zusätzlich im Fernsprechendgerät vorgesehenen Leistungsmerkmalen zuständig ist. In jedem Falle ist dadurch sichergestellt, daß viele unterschiedliche Prozesse unabhängig voneinander parallel durchgeführt werden können.

Eine andere vorteilhafte Ausgestaltung des erfinderischen Verfahrens ist dadurch gekennzeichnet, daß bei Betätigen einer Namenstaste der zu dieser Namenstaste gehörende Speicherinhalt ausgelesen und analysiert wird, daß dieser Speicherinhalt, wenn es sich um eine Folge von sowohl durch Betätigen von Ziffern-als auch von Funktionstasten entstandener Anreize handelt, in entsprechende aufeinanderfolgende Ziffern- bzw. Funktionscodes umgesetzt wird, und daß diese Ziffern- bzw. Funktionscodes nacheinander den entsprechenden Untereinheiten zugeführt werden, wobei der jeweils nachfolgende Code erst dann weitergeleitet wird, nachdem auftretende Zustandsänderungen der betroffenen Untereinheiten in einem zentralen Zustandsspeicher erfaßt und berücksichtigt worden sind. Dadurch wird auf einfache Weise verhindert, daß eine Folge von durch Betätigen von Ziffern- und Funktionstasten entstandener Anreize, die einer Namenstaste zugeordnet sind, an ein- und dieselbe Untereinheit weitergeleitet wird, und es dadurch zur Durchführung fehlerhafter Prozesse kommt.

Eine andere Weiterbildung des erfindungsgemäßen Verfahrens sieht vor, daß den einzelnen Untereinheiten für die optische Signalisierung bestimmter Zustände unterschiedliche Prioritäten zugeordnet werden, wobei allgemein der Untereinheit, welcher die Zifferntasten zugeordnet sind, die höchste Priorität zugeordnet wird. Durch die Einführung unterschiedlicher Prioritäten für die optische Signalisierung der einzelnen Untereinheiten wird auf einfache Weise erreicht, daß der Aufbau einer Nicht-Sprach-Verbindung parallel zu einer bestehenden Sprachverbindung entsprechend signalisiert werden kann, da in diesem Falle der für den Aufbau der Nicht-Sprach-Verbindung zuständigen Untereinheit die Zifferntasten zugeordnet sind, und sie damit die höhere Priorität besitzt.

Weitere Ausgestaltungen sowie Vorteile des erfindungsgemäßen Verfahrens ergeben sich aus der nachfolgenden Beschreibung des erfindungsgemäßen Verfahrens.

Im folgenden wird das erfindungsgemäße Verfahren anhand einer Zeichnung näher erläutert.

Es zeigen
- FIG 1: schematisch die Verarbeitung von eingehenden Anreizen durch verschiedene Untereinheiten, und
- FIG 2: speziell die Verarbeitung von Anreizen, die durch die Betätigung von Namenstasten erfolgen.

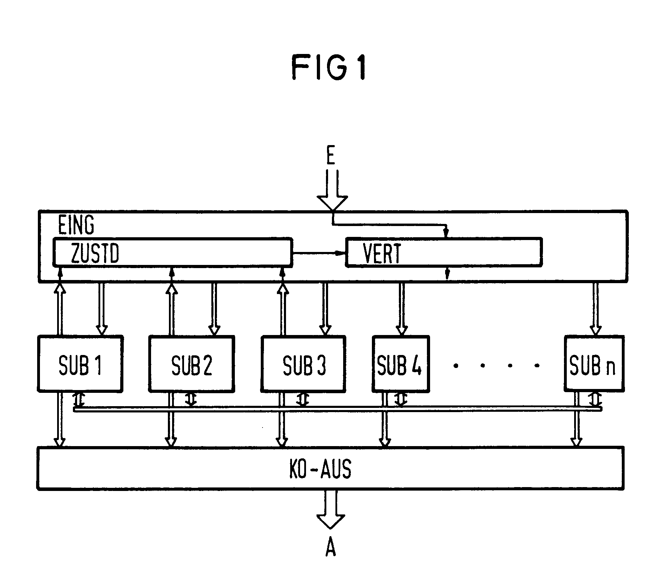

In FIG 1 ist die Verarbeitung der auftretenden Anreize schematisch dargestellt. Die entstehenden Anreize werden über einen Eingang E einer Eingangsschaltung EING zugeführt, welche die einzelnen Anreize auf die verschiedenen Untereinheiten SUB1 bis SUBn verteilt. Die Ergebnisse der von den einzelnen Untereinheiten durchgeführten Prozesse werden über eine Ausgabeschaltung KO-AUS einem Ausgang A zugeführt, wo sie zur weiteren Verwendung zur Verfügung stehen. Die Ausgangssignale können z.B. zur optischen oder akustischen Signalisierung Verwendung finden.

Die Eingangsschaltung EING besteht im wesentlichen aus dem Zustandsspeicher ZUSTD und dem eigentlichen Anreizverteiler VERT. Im Zustandsspeicher ZUSTD ist jeweils z.B. abgespeichert, ob eine bestimmte Untereinheit z.Zt. bereits aktiviert ist oder zur Durchführung eines Prozesses zur Verfügung steht. Entsprechend den abgespeicherten Zuständen werden die Anreize von dem Anreizverteiler VERT an die einzelnen Untereinheiten weitergeleitet.

Bei der vorliegenden Beschreibung des erfindungsgemäßen Verfahrens wird davon ausgegangen, daß das digitale Fernmeldeendgerät über n Untereinheiten verfügt. Dabei sollen die Untereinheiten SUB1 und SUB2 möglichen Sprachverbindungen zugeordnet sein. Dabei wird die jeweils zuerst aktivierte Untereinheit dieser beiden Untereinheiten einer Erstverbindung zugeordnet. Bei dieser Erstverbindung kann es sich um eine gehende Intern- oder Externverbindung bzw. um eine kommende Erstverbindung handeln. Die zweite einer Sprachverbindung zugeordnete Untereinheit wird dann jeweils einer kommenden Zweitverbindung zugeordnet, welche mit der Anrufübernahmetaste übernommen werden kann. Eine gerade aktive Erstverbindung wird dabei automatisch gehalten. Mögliche im Zusammenhang mit einer Sprachverbindung stehende Leistungsmerkmale, wie z.B. Rückfrage einleiten, Übernehmen und Übergeben, werden auf Grund entsprechender Anreize jeweils von der Untereinheit bearbeitet, die gerade aktiviert ist. Nachdem der Gesprächszustand einmal erreicht wurde, besteht von den Bedienprozeduren her kein Unterschied mehr zwischen der Erst- und der Zweitverbindung.

Die Untereinheit SUB3 soll im vorliegenden Fall einer Nicht-Sprach-Verbindung zugeordnet sein, über die z.B. Datendienste in Anspruch genommen werden können. Da diese Datendienste keinen Sprachkanal benötigen, kann die Untereinheit SUB3 unabhängig von den beiden Untereinheiten SUB1 und SUB2 aktiviert werden. Diese Untereinheit übernimmt, wenn sie nicht mit einer Nicht-Sprach-Verbindung beaufschlagt ist, weiterhin sogenannte Check Funktionen, wie z.B. das Programmieren, Kontrollieren oder Löschen von Zielen auf Namenstasten und Direktruftasten, oder von Zielen für die individuelle Kurzwahl. Aus der Beschreibung ergibt sich also, daß diese sogenannten Check-Funktionen als auch die Nicht-Sprach-Funktionen unabhängig von vorhandenen Sprachverbindungen durchgeführt werden können.

Bei dem beschriebenen Beispiel sind noch weitere Untereinheiten SUB4 bis SUBn vorgesehen. Diesen Untereinheiten können im einzelnen bestimmte Leistungsmerkmale wie z.B. Anzeigen von Datum und Uhrzeit, Anrufumleitung, Ein/Ausschalten, zugeordnet sein. Es besteht aber auch die Möglichkeit, diese zusätzlichen Leistungsmerkmale, die in einem entsprechenden digitalen Fernmeldeendgerät realisiert sind, der Untereinheit zuzuordnen, die für die Nicht-Sprach-Verbindungen zuständig ist. Weiterhin ist festzustellen, daß nach dem erfindungsgemäßen Verfahren das digitale Fernmeldeendgerät über mehr als zwei Untereinheiten verfügen kann, die Prozesse in Verbindung mit dem Aufbau von Sprachverbindungen durchführen. In diesem Zusammenhang ist festzustellen, daß lediglich die Untereinheiten, die den Sprachverbindungen bzw. den Nicht Sprach-Verbindungen zugeordnet sind, ihren momentanen Zustand an den Zustandsspeicher ZUSTD melden.

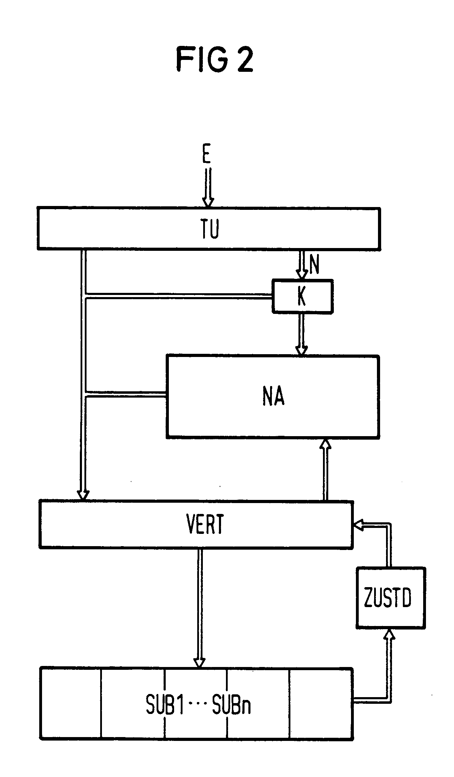

In FIG 2 sind die zusätzlichen Verfahrensschritte dargestellt, die notwendig sind, wenn einer Namenstaste eine Folge von durch Betätigen von Ziffern- und Funktionstasten entstandener Anreize zugeordnet ist. In diesem Fall werden alle Anreize erst einer Schaltung TU zugeführt, in welcher festgestellt wird, durch Betätigung welcher Taste der entsprechende Anreiz entstanden ist.

Handelt es sich dabei um eine Ziffern- bzw. Funktionstaste, so wird der entsprechende Anreiz unmittelbar an den Anreizverteiler VERT weitergeleitet. Handelt es sich um einen Anreiz, der durch Betätigen einer Namenstaste entstanden ist, so wird dieser Anreiz über den Ausgang N der Verknüpfungsschaltung K zugeführt. In der Verknüpfungsschaltung K wird festgestellt, ob es sich bei dem durch die Betätigung einer Namenstaste entstandenen Anreiz um einen Anreiz in Verbindung mit einer Check-Funktion, d.h. um das Programmieren, Kontrollieren oder Löschen von Zielen auf Namenstasten handelt. Ist dies der Fall, so wird der Anreiz direkt an den Anreizverteiler VERT weitergeleitet. Ist dies nicht der Fall, so wird der Anreiz dem Namenstastenanalysator NA zugeführt. Der zu dieser Namenstaste gehörende Speicherinhalt wird ausgelesen und dem Namenstastenanalysator NA zugeführt. Dort wird der Speicherinhalt in entsprechende aufeinanderfolgende Ziffern- bzw. Funktionscodes umgesetzt und zwischengespeichert. Die einzelnen Codes werden nacheinander dem Anreizverteiler VERT zugeführt, der sie an die entsprechende Untereinheit weiterleitet. Erst wenn über den Zustandsspeicher ZUSTD an den Namenstastenanalysator NA die Mitteilung ergeht, daß der dem Ziffern-, bzw. Funktionscode entsprechende Anreiz vollständig durch die entsprechende Untereinheit bearbeitet worden ist, wird vom Namenstastenanalysator NA der nächste Anreiz an den Verteiler weitergegeben. Auf diese Weise ist sichergestellt, daß jeder Anreiz erst dann weitergeleitet wird, wenn der vorherige Anreiz von einer Untereinheit verarbeitet worden ist und eventuelle Zustandsänderungen berücksichtigt worden sind.

Nachfolgend soll die Verarbeitung derjenigen Ausgangssignale beschrieben werden, die zur Ansteuerung des Displays des Fernmeldeendgerätes dienen. Vorausgesetzt wird dabei, daß das Fernmeldeendgerät lediglich über ein Display eingeschränkter Größe verfügt, auf dem jeweils nur die Information einer Untereinheit angezeigt werden kann.

Bei einer bestehenden Sprachverbindung ist dieses Display durch die für die Sprachverbindung zuständigen Untereinheiten - im vorliegenden Falle entweder SUB1 oder SUB2 - belegt. Um gleichzeitig aber eine optische Signalisierung gesprächsbegleitender Prozesse, die von der Untereinheit SUB3 durchgeführt werden können, zu ermöglichen, werden den einzelnen Untereinheiten für die optische Signalisierung unterschiedliche Prioritäten zugeordnet. Dabei kann man so vorgehen, daß der Untereinheit die höhere Priorität zugeordnet wird, der auch die Zifferntasten zugeordnet sind. Das bedeutet z.B., daß, wenn bei einer bestehenden Sprachverbindung mit Hilfe der Untereinheit SUB3 eine Nicht-Sprach-Verbindung aufgebaut werden soll, dieser Untereinheit die Zifferntasten zugeordnet werden und ihr damit gleichzeitig die höhere Priorität zugeordnet wird. Auf diese Weise ist es möglich, daß der Benutzer bei einem gesprächsbegleitendem Aufbau einer Nicht Sprach-Verbindung die damit verbundenen Zustände optisch signalisiert bekommt.

Um während einer bestehenden Gesprächsverbindung gleichzeitig Kontroll-, Programmier- bzw. Löschmaßnahmen durchzuführen, die eine optische Signalisierung erfordern, kann weiterhin festgelegt werden, daß der optischen Signalisierung von Zuständen in Verbindung mit Kontroll-, Programmier- bzw. Löschfunktionen eine höhere Priorität zugeordnet wird als der optischen Signalisierung von Zuständen bestehender Sprachverbindungen. Das bedeutet im Prinzip, daß der für die Nicht-Sprach-Verbindungen und die Check-Funktionen zuständigen Untereinheit SUB3 bezüglich der optischen Signalisierung eine höhere Priorität zugeordnet wird als den beiden Untereinheiten SUB1 und SUB2, die für Sprachverbindungen zuständig sind. Dadurch ist gewährleistet, daß der Benutzer auf Tastendrücke in jedem Fall eine daraus resultierende Displayanzeige sieht.

Wie bereits ausgeführt worden ist, können weitere Untereinheiten für bestimmte Leistungsmerkmale zusätzlich vorgesehen werden. So könnte z.B. der Untereinheit SUBn das Leistungsmerkmal Datum/Uhrzeit zugeordnet sein. In diesem Falle wäre es zweckmäßig, der entsprechenden Untereinheit für die optische Signalisierung die höchste Priorität zuzuordnen. Dabei kann allerdings so verfahren werden, daß die entsprechende optische Anzeige mit der höheren Priorität nach einem bestimmten Zeitraum beendet wird, um danach das Display für die Anzeige von Zuständen mit niederer Priorität zur Verfügung zu stellen.

## Patentansprüche

1. Verfahren zur Durchführung unterschiedlicher Prozesse (z. B. Aufbau von Verbindungen, Nutzung bestimmter Leistungsmerkmale) auf Grund externer oder durch Betätigen von Ziffern-, Funktions- oder Namenstasten erfolgter interner Anreize in einem digitalen für Sprach- und Datenübertragung geeigneten Fernmeldeendgerät,
**dadurch gekennzeichnet,**
daß jeweils einem oder mehreren der aufgrund eines Anreizes durchzuführenden Prozesse eine von mehreren Untereinheiten (SUB1 bis SUBn) des digitalen Fernmeldeendgeräts zugeordnet wird, wobei jeweils bestimmte Untereinheiten (z. B. SUB1) bestimmten durchzuführenden Prozessen zugeordnet werden, und jede Untereinheit (z.B. SUB1) alle mit dem jeweiligen Prozeß zusammenhängende Bearbeitungsschritte in der Weise selbsttätig abwickelt, daß von ihr das dem jeweiligen Anreiz zugeordnete Ergebnis ausgegeben wird, daß alle Anreize einer zentralen Eingangsschaltung (EING) zugeführt werden, in der in einem Zustandsspeicher (ZUSTD) die augenblicklichen Zustände der einzelnen Untereinheiten (SUB1 bis SUB3) abgespeichert sind, und daß die zentrale Eingangsschaltung (EING) aufgrund der abgespeicherten Zustände die eintreffenden Anreize auf die entsprechenden Untereinheiten (z.B. SUB1) verteilt, wobei Änderungen im zentralen Zustandsspeicher (ZUSTD) durch die Untereinheiten (SUB1 bis SUB3) erfolgen.

2. Verfahren nach Anspruch 1,
**dadurch gekennzeichnet,**
daß mindestens zwei Untereinheiten (SUB1,SUB2) für die Abwicklung von Sprachverbindungen zuständig sind.

3. Verfahren nach Anspruch 1,
**dadurch gekennzeichnet,**
daß eine Untereinheit (SUB3) für die Abwicklung von Nicht-Sprach-Verbindungen zuständig ist.

4. Verfahren nach Anspruch 1,
**dadurch gekennzeichnet,**
daß eine oder mehrere Untereinheiten für die Abwicklung von zusätzlich im Fernmeldeendgerät vorgesehenen Leistungsmerkmalen zuständig ist.

5. Verfahren nach Anspruch 1,
**dadurch gekennzeichnet,**
daß eine Untereinheit (SUB3) für die Abwicklung von Nicht-Sprach-Verbindungen und für die Abwicklung von zusätzlich in Fernsprechendgerät vorgesehenen Leistungsmerkalen zuständig ist.

6. Verfahren nach Anspruch 3 bis 5,
**dadurch gekennzeichnet,**
daß jeder der nicht eine Sprachverbindung betreffenden Prozesse gesprächsbegleitend zu einer Sprachverbindung durchgeführt werden kann.

7. Verfahren nach Anspruch 1,
**dadurch gekennzeichnet,**
daß bei Betätigen einer Namenstaste der zu dieser Namenstaste gehörende Speicherinhalt ausgelesen und analysiert wird, daß dieser Speicherinhalt, wenn es sich um eine Folge von sowohl durch Betätigen von Ziffern- als auch von Funktionstasten entstandener Anreize handelt, in entsprechende aufeinanderfolgende Ziffern- bzw. Funktionscodes umgesetzt wird, und daß diese Ziffern- bzw. Funktionscodes nacheinander den entsprechenden Untereinheiten (SUB1 bis SUBn) zugeführt werden, wobei der jeweils nachfolgende Code erst dann weitergeleitet wird, nachdem auftretende Zustandsänderungen der betroffenen Untereinheiten in einem zentralen Zustandsspeicher (ZUSTD) erfaßt und berücksichtigt worden sind.

8. Verfahren nach Anspruch 1,
**dadurch gekennzeichnet,**
daß den einzelnen Untereinheiten (SUB1 bis SUB3) für die optische Signalisierung bestimmter Zustände unterschiedliche Prioritäten zugeordnet werden, wobei allgemein der Untereinheit, welcher die Zifferntasten zugeordnet sind, die höhere Priorität zugeordnet wird.

9. Verfahren nach Anspruch 8,
**dadurch gekennzeichnet,**
daß der optischen Signalisierung von Zuständen in Verbindung mit Kontroll-, Programmier-, Lösch- bzw. Nicht-Sprach-Funktionen eine höhere Priorität zugeordnet wird als der optischen Signalisierung von Zuständen bestehender Sprachverbindungen.

10. Verfahren nach Anspruch 8 oder 9,
**dadurch gekennzeichnet,**
daß optische Signalisierungen mit einer höheren Priorität nach einer vorgegebenen Zeitspanne auf dem Display gelöscht werden, und daß das Display danach zur Signalisierung von Zuständen niederer Priorität mit der entsprechenden Untereinheit verbunden wird.

## Claims

1. Method for carrying out different processes (for example setting up connections, utilising certain performance features) on the basis of external stimuli or internal stimuli effected by operating number, function or name keys in a digital telecommunication terminal adapted to speech and data transmission, characterised in that in each case one of a number of sub-units (SUB1 to SUBn) of the digital telecommunication terminal is allocated to one or a number of processes to be carried out on the basis of a stimulus, certain sub-units (for example SUB1) in each case being allocated to certain processes to be carried out, and each sub-unit (for example SUB1) automatically handling all processing steps associated with the respective process, in that it outputs the result associated with the respective stimulus, in that all stimuli are supplied to a central input circuit (EING) in which the instantaneous states of the individual sub-units (SUB1 to SUB3) are stored in a state memory (ZUSTD), and in that the central input circuit (EING) distributes the incoming stimuli to the corresponding sub-units (for example SUB1) on the basis of the stored states, changes in the central state memory (ZUSTD) being effected by the sub-units (SUB1 to SUB3).

2. Method according to Claim 1, characterised in that at least two sub-units (SUB1, SUB2) are responsible for handling voice connections.

3. Method according to Claim 1, characterised in that one sub-unit (SUB3) is responsible for handling non-voice connections.

4. Method according to Claim 1, characterised in that one or more sub-units are responsible for handling additional performance features provided in the telecommunication terminal.

5. Method according to Claim 1, characterised in that one sub-unit (SUB3) is responsible for handling non-voice connections and for handling additional performance features provided in the telephone terminal.

6. Method according to Claims 3 to 5, characterised in that each of the processes not related to a voice connection can be carried out accompanying the conversation to form a voice connection.

7. Method according to Claim 1, characterised in that when a name key is operated, the memory content belonging to this name key is read out and analyzed, in that this memory content, if it is a sequence of stimuli produced by operating number and function keys, is converted into corresponding successive number or function codes, and that these number or function codes are successively supplied to the corresponding sub-units (SUB1 to SUBn), the code following in each case only being forwarded after state changes occurring in the related sub-units have been detected and taken into consideration in a central state memory (ZUSTD).

8. Method according to Claim 1, characterised in that different priorities are allocated to the individual sub-units (SUB1 to SUB3) for the visual signalling of certain states, the sub-unit to which the number keys are allocated generally being allocated the higher priority.

9. Method according to Claim 8, characterised in that a higher priority is allocated to the visual signalling of states in conjunction with control, programming, clearing or non-voice functions than to the visual signalling of states of existing voice connections.

10. Method according to Claim 8 or 9, characterised in that visual signalling with higher priority is cleared on the display after a predetermined period, and in that the display is then connected to the corresponding sub-unit for signalling states of lower priority.

## Revendications

1. Procédé d'exécution de divers processus (par exemple l'établissement de liaisons, l'utilisation de caractéristiques de puissance déterminées) à partir d'excitations extérieures ou d'excitations intérieures produites en manoeuvrant des touches à chiffres, de touches fonctionnelles ou de touches à noms, dans un terminal numérique de télécommunication convenant pour la transmission de signaux vocaux et de données, caractérisé par le fait que l'une de plusieurs sous-unités (SUB1 à SUBn) du terminal numérique de télécommunication est associée respectivement à un ou plusieurs des processus devant être exécutés sur la base d'une excitation, des sous-unités déterminées (par exemple SUB1) étant associées à des processus déterminés devant être exécutés, et que chaque sous-unité (par exemple SUB1) déroulant automatiquement toutes les phases de traitement, qui sont liées au processus respectif de telle sorte que ces sous-unités fournissent le résultat associé à l'excitation respective, que toutes les excitations sont envoyées à un circuit central d'entrée (EING), dans lequel les états instantanés de différentes sous-unités (SUB1 à SUB3) sont mémorisés dans une mémoire d'états (ZUSTD), et que le circuit central d'entrée (EING) répartit, sur la base des états mémorisés, les différentes excitations dans les sous-unités correspondantes (par exemple SUB1), des changements dans la mémoire centrale d'états (ZUSTD) s'effectuant au moyen des sous-unités (SUB1 à SUB3).

2. Procédé suivant la revendication 1, caractérisé par le fait qu'au moins deux sous-unités (SUB1,SUB2) sont responsables du déroulement de liaisons vocales.

3. Procédé suivant la revendication 1, caractérisé par le fait qu'une sous-unité (SUB3) est responsable du déroulement de liaisons non vocales.

4. Procédé suivant la revendication 1, caractérisé par le fait qu'une ou plusieurs sous-unités sont responsables du déroulement de caractéristiques de puissance prévues en supplément dans le terminal de télécommunication.

5. Procédé suivant la revendication 1, caractérisé par le fait qu'une sous-unité (SUB3) est responsable du déroulement de liaisons non vocales et du déroulement de caractéristiques de puissance prévues en supplément dans le terminal téléphonique.

6. Procédé suivant les revendications 3 à 5, caractérisé par le fait que chacun des processus, qui ne concernent pas une liaison vocale, peut être effectué de manière à accompagner des signaux vocaux pour former une liaison vocale.

7. Procédé suivant la revendication 1, caractérisé par le fait que, lors de l'actionnement d'une touche à nom, le contenu de la mémoire associé à cette touche à nom est lu et analysé, que lorsqu'il s'agit d'une suite d'excitations apparues par manoeuvre de touches à chiffres et également de touches fonctionnelles, ce contenu de mémoire est converti en des codes de chiffres ou en des codes fonctionnels successifs correspondants, et que ces codes de chiffres ou ces codes fonctionnels sont envoyés successivement aux sous-unités correspondantes (SUB1 à SUBn), le code suivant n'étant retransmis qu'après détection et prise en compte, dans une mémoire centrale d'états (ZUSDT), des changements d'état des sous-unités concernées.

8. Procédé suivant la revendication 1, caractérisé par le fait qu'aux différentes sous-unités (SUB1 à SUB3) pour la signalisation optique d'états déterminés sont associées des priorités différentes, la priorité la plus grande étant en général associée à la sous-unités, à laquelle sont associées les touches à chiffres.

9. Procédé suivant la revendication 8, caractérisé par le fait qu'à la signalisation optique d'états en liaison avec des fonctions de contrôle, de programmation, d'effacement et de non transmission de signaux vocaux, est associée une priorité plus grande que celle de la signalisation optique de liaisons vocales constituées d'états.

10. Procédé suivant la revendication 8 ou 9, caractérisé par le fait que des signalisations optiques ayant une priorité supérieure sont effacées au bout d'un intervalle de temps prédéterminé sur le dispositif d'affichage et que ce dernier est ensuite relié à la sous-unité correspondante pour la signalisation d'états ayant une priorité plus faible.
